# EUROPEAN PATENT APPLICATION

(11) **EP 4 274 007 A2**
(43) Date of publication of application: **08.11.2023**
(21) Application number: 23171730.7
(22) Date of filing: 04.05.2023
(51) Int. Cl.: H01M 50/107, H01M 50/117, H01M 50/119, H01M 50/124, H01M 50/153, H01M 50/159, H01M 50/545, H01M 50/548, H01M 50/559

(54) **MINIATURE ELECTRICAL POWER SOURCE HOUSED IN A CASING HAVING AN INTERMEDIATE CERAMIC RING DIFFUSION BONDED TO OPPOSED TITANIUM MEMBERS**

(30) Priority: 06.05.2022 US 202263338922 P; 25.04.2023 US 202318138942
(71) Applicant: Greatbatch Ltd., Clarence, NY 14031 (US)
(72) Inventor: RUBINO, Robert S., Williamsville, 14221 (US)
(74) Representative: Drywood, Rosalind Aerona

(57) **Abstract**

An electrical power source comprises a casing made by diffusion bonding an intermediate ceramic ring to a titanium base plate and a titanium top ring. An anode housed in the resulting open-ended container is electrically connected to the base plate. A separator is positioned on the anode. Separately, a cathode is electrically connected to a titanium lid. The lid fitted on the titanium top ring opposite the intermediate ceramic ring is welded to the top ring to close the casing. An electrolyte filled into the casing through a fill port in the lid activates the anode/cathode assembly. The fill port is then hermetically sealed. Gold pads are individually contacted to the base plate and the lid, which serve as opposite polarity terminals for the power source.

## Description

### CROSS-REFERENCE TO RELATED APPLICATION

This application claims priority to U.S. Provisional Application Serial No. 63/338,922, filed on May 6, 2022.

### FIELD OF THE INVENTION

The present invention relates to the conversion of chemical energy to electrical energy. More particularly, the present invention relates to an electrical power source, for example, a primary or a secondary electrochemical cell. While there are no limits to the shape of the electrical power source, it preferably has a total size or volume that is less than 0.5 cc. Such so-called miniature-sized electrical power sources enable numerous new and improved medical device therapies. Miniature electrical power sources are defined as those having a size or total volume that is less than 0.5 cc.

The present invention offers a solution to current implantable electrical power source size limitations by diffusion bonding opposed shaped titanium members to an intermediate ceramic ring to form an open-ended container. The first active material, which is preferably the anode, covered by a separator is housed inside the container. Separately, the second active material, which is preferably the cathode, is contacted to the inner surface of a titanium lid, preferably with a laterally off-set via in the lid serving as an electrolyte fill port. The open end of the container is then closed, preferably by welding the lid to the container to complete the power source casing. After an activating electrolyte is filled into the casing through the fill port, the port is closed. This construction electrically isolates the opposite polarity anode and cathode from each other by the intermediate ceramic ring. That way, the titanium members separated by the intermediate ceramic ring serve as opposite polarity terminals for the electrical power source.

### BACKGROUND OF THE INVENTION

One approach that has been widely used to make miniature electrochemical cells is referred to as a thin film technology where opposite polarity electrode active materials deposited onto a respective current collector by physical vapor deposition (PVD) are activated with a solid electrolyte. This is an attractive approach since there is no manual handling of miniature parts and the manufacturing process is well suited to automated production using a pick-and-place semiconductor-type approach.

However, one drawback of thin film electrochemical cells is that the electrodes are non-porous, which means that the reaction rate is limited by solid-state diffusion of ions through the active layers. Solid-state diffusion limits the active electrode thickness to a range of about 10 microns to about 20 microns, which equates to typical capacities of about 75 to about 100 µAh/cm². This capacity range means that there is generally not enough space available in many medical and non-medical devices to provide sufficient capacity to power the device.

Alternate approaches developed by Greatbatch Ltd., Clarence, New York, are the hermetic coin cells shown in U.S. Pub. Nos. 2022/0085473 to Arellano et al. and 2022/0166095 to Dianetti et al. The electrochemical cell configurations described in these publications can provide capacities of about 2,000 µAh/cm², or more. However, even that much capacity may not be enough for some medical device applications. A significant drawback is that the space inside the casing that is available for the electrodes is reduced by a glass-to-metal seal, which results in an effective wall thickness of about 625 µm around the casing circumference. According to the present invention, in order to increase the cell's capacity for instance to greater than about 4000 µAh/cm², it is desired to minimize the wall thickness preferably to about 100 µm around the casing circumference.

Further, the glass-to-metal seal of the cell designs described in the '473 and '095 publications is most reliable in a cylindrical shape. However, in order to maximize utilization of space within the medical device being powered by the miniature electrical power source of the present invention, it is desired to have a design that can be made in any shape including those that are not cylindrical.

Finally, the cell designs described in the '473 and '095 publications require precision machining and assembly of the individual parts that are assembled into the cells. For scale-up to very high volumes, an array-type approach using host titanium and ceramic sheets is desired where parts for multiple power sources are handled and produced simultaneously.

### SUMMARY OF THE INVENTION

Aspects and embodiments of the present invention are set out in the appended claims.

A significant benefit attributed to manufacturing an electrical power source according to the present invention is that a plurality of power sources may be manufactured in a batch process using three host titanium sheets and one ceramic host sheet. The host titanium sheets are designated the host titanium base sheet, the host titanium top sheet, and the host titanium third or lid sheet. The host base, top and lid sheets preferably each have a thickness that ranges from about 200 µm to 1 mm but are desirably only as thick as necessary to provide the required mechanical strength for the power source. The ceramic host sheet preferably has a thickness that ranges from about 100 µm to about 150 µm.

The manufacturing process may begin by cutting or milling a plurality of recesses part-way into the thickness of the host titanium base sheet. Separately, a plurality of openings are preferably cut through the ceramic host sheet and through the host titanium top sheet. The openings in the host ceramic sheet and the host titanium top sheet may be made using a milling machine that traces out the periphery of the inside diameter of a ring by making a circle having an outside diameter that is equal to the inside diameter of the to-be-built casing.

Both sides of the ceramic host sheet may be coated with a titanium layer, preferably using a physical vapor deposition (PVD) process. The thusly processed ceramic host sheet is preferably mounted on top of the host titanium base sheet and the host titanium top sheet is then mounted on top of the ceramic host sheet with the respective openings in the top host sheet and in the ceramic host sheet being in registry with each other and with the plurality of recesses in the base host sheet. The titanium base and top host sheets may then be diffusion bonded to the intermediate ceramic host sheet. This is preferably done by subjecting the host sheet stack to a pressure ranging from about 1 MPa to about 5 MPa at a temperature ranging from about 850°C to about 950°C for up to about 2 hours. This forms a plurality of open-ended containers in the bonded stack.

In a separate manufacturing line, anodes for a primary electrochemical cell may be cut or punched from a sheet of lithium or a lithium alloy. Graphite, silicon, lithium titanium oxide are exemplary anode materials for a secondary electrical power source. For a secondary system, the desired anode active material may be mixed in a solvent with a conductive carbon and a polymeric binder constituent to make an anode active slurry or paste that is formed into a sheet, preferably by tape casting, extruding, or coating using any method. Secondary anodes may then be cut or punched from this sheet and, after drying, the resulting anodes are preferably pressed to a final porosity of about 20% to about 40%. In either a primary or a secondary system, the thickness of the anode active material preferably ranges from about 50 µm to about 500 µm. Individual anodes may then be adhered to the base host sheet, nested in one of the shaped recesses, preferably using a conductive carbonaceous paste composed of carbon black and a polymeric binder.

Next, separators cut from a sheet to the desired shape may be placed into the open-ended container on top of the anode. Then, after the host titanium base and top sheets are bonded to the intermediate ceramic host sheet and an anode covered by a separator is nested in each of the open-ended containers, a laser is preferably used to cut through the bonded sheets to singulate open-ended containers having the desired shape, whether cylindrical or non-cylindrical, of a power source for a medical device.

Separately, a plurality of spaced-apart cathodes, each having a thickness that preferably ranges from about 50 µm to about 500 µm, may be adhered to the host titanium lid sheet using a conductive carbonaceous paste. Examples of cathode active materials for secondary electrochemical cells include lithium cobalt oxide, lithium nickel cobalt manganese oxide, lithium iron phosphate, lithium nickel cobalt aluminum oxide, among others. For primary cells, silver vanadium oxide, carbon monofluoride (CFₓ) or manganese dioxide are preferred. The desired cathode active material is preferably combined with a polymeric binder and a conductive carbon. The electrode sheets from which the cathodes are cut or punched may be formed by making a slurry of the electrode constituents in a solvent and then tape casting, extruding, or coating using any method. After drying, the resulting cathodes are preferably pressed to a final porosity of about 20% to about 40%. A plurality of plate-shaped titanium lids may then be cut from the lid host sheet. The lids are sized to close the previously described open-ended container and preferably have a thickness that ranges from about 100 µm to about 200 µm.

Each lid preferably also has an electrolyte fill port that is laterally off-set from the adhered cathode. The fill port may be formed by laser or mechanical milling a respective plurality of openings into the lid host sheet in alignment with each casing that will subsequently be singulated from the stacked assembly of the host titanium base and top sheets and the intermediate host ceramic sheet. Lids cut from the third host titanium sheet may then be welded to the open end of a container to form a casing, each housing an electrode assembly.

A suitable activating electrolyte may be a non-aqueous solution containing a lithium salt dissolved in a mixture of solvents including at least one low viscosity solvent and at least one high permittivity solvent. Then, after filling each casing with electrolyte, the fill port is preferably close-welded by melting the titanium material of the lid surrounding the port using a laser. Alternately, a metallic plug is inserted into the fill port and welded to the titanium lid.

If desired, a gold conductive pad for each power source is supported on a titanium adhesion layer contacted to an outer surface of both the host titanium top and base sheets. The gold conductive pads are preferably deposited using PVD or chemical vapor deposition (CVD) methods known in the art.

Depending on their chemistry, the electrical power sources are then subjected to an appropriate electrical test. In one example, a carbon/lithium nickel manganese cobalt oxide secondary cell having a diameter of 2.5 mm and a height of 0.7 mm is charged to 4.2 V. The cell is aged on open circuit voltage (OCV) for 2 to 3 weeks before several charge/discharge cycles between 4.2 V and 3.0 V are performed at a C/5 rate. The cell capacity is about 300 pAh.

Individual electrical power sources singulated from the stacked and weld-connected top, intermediate, and base host sheets closed by a lid according to the present invention preferably have a diameter of about 2.5 mm and a height of about a 0.7 mm. The resulting wall thickness is preferably about 100 µm, which is substantially less than the 625 µm seal of the prior art cells described in the previously discussed U.S. Pub. Nos. 2022/0085473 to Arellano et al. and 2022/0166095 to Dianetti et al. The efficient packaging of the present invention electrical power sources results in a delivered capacity of about 300 µAh, or more.

These and other aspects of the present invention will become increasingly more apparent to those skilled in the art by reference to the following detailed description and to the appended drawings.

### BRIEF DESCRIPTION OF THE DRAWINGS

FIG. 1 a cross-sectional view of an exemplary electrical power source 10 having a casing 12 housing an electrode assembly comprising a separator 14 intermediate an anode active material 16 and a cathode active material 18 with the casing being formed from an intermediate ceramic ring 20 that is diffusion bonded to a titanium base tray 22 and a titanium top ring 24 with a lid 26 closing the top ring according to the present invention.
FIG. 2 is a cross-sectional view of the intermediate ceramic ring 20 before it is diffusion bonded to both the titanium base tray 22 and the titanium top ring 24 shown in FIG. 1.
FIG. 3 is a cross-sectional view of the titanium base tray 22 shown in FIG. 1.
FIG. 4 is a cross-sectional view of the titanium top ring 24 shown in FIG. 1.
FIG. 5 is a cross-sectional view of the titanium lid 26 that is welded to the titanium top ring 24 to close the casing 12 shown in FIG. 1.
FIG. 6 is a cross-sectional view of the intermediate ceramic ring 20 positioned between the titanium base tray 22 and the titanium top ring 24.
FIG. 7 is a cross-sectional view showing the titanium base tray 22 serving as a negative-polarity terminal electrically connected to the anode active material 16 through a conductive carbonaceous paste 30.
FIG. 8 is a cross-sectional view showing the titanium lid 26 connected to the titanium top ring 24 serving as a positive-polarity terminal for the cathode active material 18 through a conductive carbonaceous paste 32.
FIG. 9 is a cross-sectional view of an alternate embodiment of the titanium top ring 24' having an inwardly facing step 24D' forming a ledge 24E' on which the lid 26 is seated.
FIG. 10 is a cross-sectional view of another exemplary embodiment of an electrical power source 100 having a casing 112 housing an electrode assembly comprising a separator 14 intermediate an anode active material 16 and a cathode active material 18 with the casing being formed from an intermediate ceramic ring 120 that is diffusion bonded to a titanium base plate 122 and a titanium lid 126 closing the ceramic ring according to the present invention.
FIG. 11 is a cross-sectional view of the titanium base plate 122 shown in FIG. 10.

### DETAILED DESCRIPTION OF THE PREFERRED EMBODIMENTS

As described in this specification, a high-purity fused silica wafer is commercially available from numerous manufacturers. A suitable high-purity fused silica wafer has a thickness that ranges from about 100 µm to about 4 mm. One source is Corning, Incorporated, Corning, New York under the designations 7979, 7980 and 8655, designation 7980 being preferred.

As described in this specification, the term "plurality" means more than two up to a large number.

As described in this specification, the term "diffusion bonding" is a solid-state welding technique used to join similar metals together, for example, separate titanium members. Diffusion bonding operates on the principle of solid-state diffusion, wherein the atoms of two solid, metallic surfaces intersperse themselves over time. This is typically accomplished at an elevated temperature, which is approximately 50% to 75% of the absolute melting temperature of the materials. Diffusion bonding is usually implemented by applying high pressure, in conjunction with necessarily high temperature, to the materials to be welded.

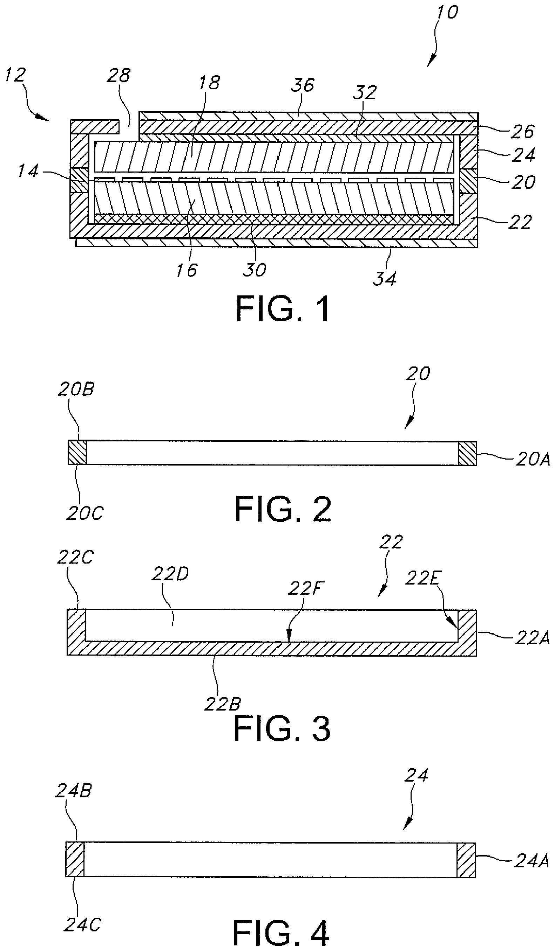

Turning now to the drawings, FIG. 1 is a cross-sectional view of an exemplary electrical power source 10 according to the present invention. The electrical power source 10 can be a capacitor or a rechargeable battery, for example a hermetically sealed rechargeable Li-ion battery. However, the electrical power source 10 is not limited to any one chemistry or even a rechargeable chemistry and can be of an alkaline cell, a primary lithium cell, a rechargeable lithium-ion cell, a Ni/cadmium cell, a Ni/metal hydride cell, a supercapacitor, a thin film solid-state cell, and the like. Preferably, the electrical power source 10 is a lithium-ion electrochemical cell comprising a carbon-based or Li₄Ti₅O₁₂-based anode and a lithium metal oxide-based cathode, such as of LiCoO₂ or lithium nickel manganese cobalt oxide (LiNiₐMn_{b}Co_{1-a-b}O₂). The electrical power source 10 can also be a solid-state thin film electrochemical cell having a lithium anode, a metal-oxide based cathode and a solid electrolyte, such as an electrolyte of LiPON (LiₓPO_{y}N_{z}).

The electrical power source 10 has a casing 12 housing an electrode assembly comprising a separator 14 that is positioned intermediate an anode active material 16 and an opposite polarity cathode active material 18. The casing 12 is manufactures from an intermediate ceramic ring 20 that is diffusion bonded to both a titanium tray-shaped base plate 22 and a titanium top ring 24. A titanium lid 26 is welded to the titanium ring 24 to close the casing 12. The titanium lid 26 has an opening that serves as an electrolyte fill port 28 for activating the electrode assembly with an electrolyte. After electrolyte is filled into the casing, the fill port 28 is hermetically sealed.

As previously described in the Summary of the Invention section of this specification, in a high-volume manufacturing process the intermediate ceramic ring 20, the titanium base tray 22, the titanium top ring 24 and the titanium lid 26 are contained in respective ceramic and host titanium sheets. However, with initial reference to FIGs. 1 to 8 and for the sake of simplicity, the electrical power source 10 including its casing 12 housing an electrode assembly according to the present invention will be described with respect to a single power source 10.

In greater detail as shown in FIGs. 1 and 2, the intermediate ceramic ring 20 residing between the titanium base tray 22 and the titanium top ring 24 is preferably made from a polycrystalline alumina (sapphire), single crystal alumina, high-purity fused silica, and mixtures thereof. The ceramic ring 20 has an outer annular surface 20A with a thickness that ranges from about 100 µm to about 150 µm and that extends to an upper ring-shaped edge 20B spaced from a lower ring-shaped edge 20C. The upper and lower ring-shaped edges 20B and 20C reside along respective planes, which are parallel to each other.

As shown in FIG. 3, the titanium base tray 22 is a plate-shaped member having an annular sidewall 22A that extends upwardly from a lower base wall 22B serving as a lower major face to an upper major face comprising a ring-shaped rim 22C surrounding a recess 22D bounded by an inner surface 22E of the annular sidewall 22A and an inner surface 22F of the base wall 22B.

As shown in FIG. 4, the titanium top ring 24 has an outer annular surface 24A that extends to an upper ring-shaped edge 24B spaced from a lower ring-shaped edge 24C. The upper and lower ring-shaped edges 24B and 24C reside along respective planes, which are parallel to each other.

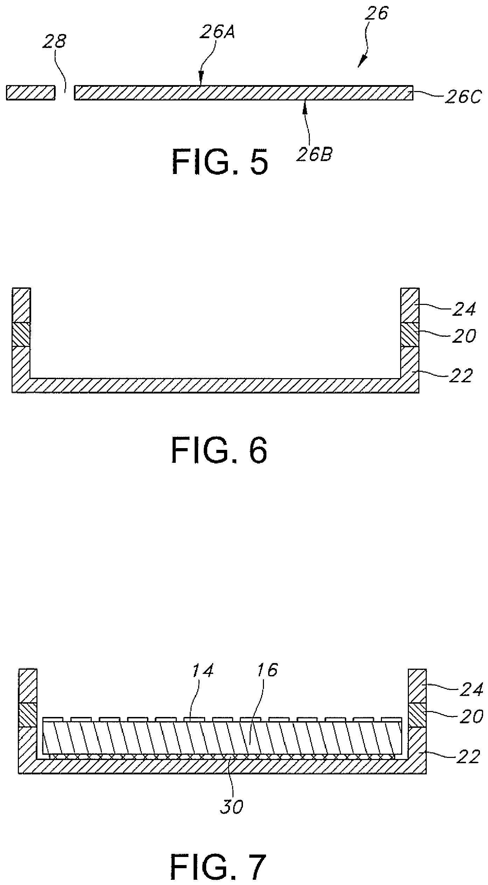

As shown in FIG. 5, the titanium lid 26 is a plate-shaped member that is sized and shaped to close the titanium top ring 24. The lid 26 has an upper planar surface 26A spaced from a lower planar surface 26B by an outer annular surface 26C. A fill port 28 extends through the lid 26 to the upper and lower planar surfaces 26A and 26B thereof. The fill port 28 is laterally off-set toward the outer annular surface 26C of the lid 26 and is preferably a cylindrically-shaped opening having a diameter that ranges from about 40 µm to about 250 µm. With the lid 26 supported on the upper ring-shaped edge 24B of the titanium top ring 24, the outer annular surface 26C of the lid 26 is aligned with the outer annular surface 24A of the ring 24.

The next step in manufacturing the exemplary electrical power source 10 is to coat the upper and lower ring-shaped edges 20B, 20C of the ceramic ring 20 with a titanium layer, preferably using a physical vapor deposition (PVD) process. The PVD coated titanium layers range from about 0.1 µm to about 5 µm thick. The thusly processed ceramic ring 20 in mounted on top of the upper ring-shaped rim 22C of the titanium base tray 22. The lower ring-shaped edge 24C of the titanium top ring 24 is then contacted to the upper ring-shaped edge 20B of the ceramic ring. In this alignment, the respective openings in the titanium top ring 24 and the ceramic ring 20 are in registry with each other and with the recess 22D in the titanium base tray 22. The titanium base tray 22 and the titanium top ring 24 are then diffusion bonded to the intermediate ceramic ring 20. This is done by subjecting the stack to a pressure ranging from about 1 MPa to about 5 MPa at a temperature ranging from about 850°C to about 950°C for up to about 2 hours. This treatment causes the titanium materials of the titanium base tray 22 and of the titanium top ring 24 to chemically bond to the PVD deposited titanium layers contacting the opposed ring-shaped edges 20B, 20C of the ceramic ring 20. An open-ended container results from the bonded stack.

Referring back to FIG. 1, a conductive carbonaceous paste 30 preferably composed of carbon black and a polymeric binder is then contacted to the inner surface 22F of the base wall 22B of the titanium base tray 22. The conductive carbonaceous paste 30 serves as an anode current collector and has a thickness that ranges from about 0.1 µm to about 3 µm. A layer of anode active material 16 is then contacted to the carbonaceous paste 30. The anode active material 16 has a thickness that ranges from about 25 µm to about 5,000 µm, more preferably a thickness of about 50 µm to about 500 µm, and preferably extends outwardly to the peripheral edge of the carbonaceous paste 30 but is spaced inwardly from the inner surface 22E of the annular sidewall 22A of the titanium tray 22.

In the case of a primary electrical power source 10, lithium is an exemplary anode active material. Other suitable anode active materials for a primary electrochemical cell include lithium alloys and intermetallic compounds including, for example, Li-Si, Li-Sn, Li-Al, Li-B and Li-Si-B alloys, and mixtures and oxides thereof. Anodes for a primary electrical power source 10 are cut or punched from a sheet of lithium or lithium alloy. Carbon, graphite, silicon, and lithium titanium oxide (Li₄Ti₅O₁₂) are exemplary anode materials for a secondary electrical power source. In the event that the anode active material is not lithium, the active material is preferably combined with a conductive carbon and a polymeric binder, such as PVDF, carboxymethyl cellulose, or styrene-butadiene rubber.

Anodes for a secondary power source are cut or punched from sheets that are formed as a slurry of the anode active material mixed with the conductive carbon and polymeric binder constituents in a solvent to make an anode active slurry or paste that is then tape cast, extruded, or coated by any method. After drying, the resulting porous secondary anodes are pressed to a final porosity of about 20% to about 40%. In that manner, the titanium base tray 22 serves as a negative-polarity terminal electrically connected to the anode active material 16 through the carbonaceous paste current collector 30.

In a similar manner, a thin layer of a conductive carbonaceous paste 32 serving as a cathode current collector is contacted to the lower planar surface 26B of the titanium lid 26. The carbonaceous paste 32 is preferably composed of carbon black and a polymeric binder and has a thickness that ranges from about 0.1 µm to about 3 µm.

A cathode active material 18 is then contacted to the carbonaceous paste 32. The cathode active material 18 preferably extends to the peripheral edge of the carbonaceous paste 32 and is deposited to a thickness that ranges from about 25 µm to about 5,000 µm, more preferably to a thickness of about 50 µm to about 500 µm. Lithiated metal oxide-based materials, for example LiCoO₂, LiMnO₂, LiMn₂O₄, LiFePO₄, lithium nickel manganese cobalt oxide (LiNiₐMn_{b}Co_{1-a-b}O₂), lithium nickel cobalt aluminum oxide are suitable cathode active materials for a secondary electrochemical cell. For a primary electrochemical system, Ag₂V₄O₁₁, CFₓ and manganese dioxide are preferred.

Cathodes for a primary or secondary power source are cut or punched from sheets that are formed as a slurry of the cathode active material mixed with the conductive carbon and polymeric binder constituents in a solvent to make a cathode active slurry or paste that is then tape cast, extruded, or coated by any method. After drying, the resulting porous cathodes are pressed to a final porosity of about 20% to about 40%.

A separator 14 is cut from a sheet to a size to rest on top of the anode active material 16 and fit into the inside diameter of the intermediate ceramic ring 20. The separator 14 can extend to the ceramic ring 20, but that is not necessary. It is only required that the separator 14 is large enough to prevent the anode active material 16 from physically contacting the cathode active material 18. An exemplary separator 14 is comprised of a porous polymeric material such as polyethylene or a polyethylene/polypropylene composite.

To complete the electrode assembly, the lid 26 supporting the conductive carbonaceous paste 32 and the cathode active material 18 is placed on the upper ring-shaped edge 24B of the titanium top ring 24. The lid 26 is then laser welded to the titanium ring 24 to close the casing 12. In that manner, the lid 26 connected to the top ring 24 serve as a positive-polarity terminal electrically connected to the cathode active material 18 through the carbonaceous paste 32.

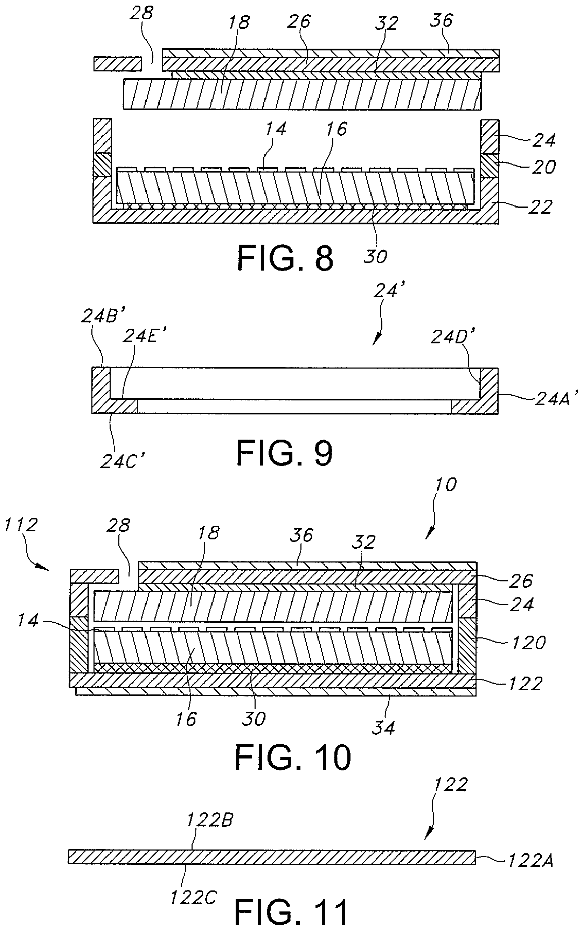

FIG. 9 illustrates an alternate embodiment of a titanium top ring 24'. In a similar manner as with the titanium ring 24 shown in FIG. 4, an outer annular surface 24A' extends to an upper ring-shaped edge 24B' spaced from a lower ring-shaped edge 24C'. The upper and lower ring-shaped edges 24B' and 24C' reside along respective planes, which are parallel to each other. However, an inner annular step 24D' extends downwardly from the upper ring-shaped edge 24B' part-way through the height of the ring 24' to form an inner annular ledge 24E'. To complete the electrode assembly using titanium ring 24', the lid 26 supporting the conductive carbonaceous paste 32 and the cathode active material 18 is placed on the inner annular ledge 24E' of the titanium top ring 24'. The lid 26 is then laser welded to the ring 24' to close the casing 12. In this embodiment, the lid 26 connected to the top ring 24' serve as a positive-polarity terminal electrically connected to the cathode active material 18 through the carbonaceous paste 32.

To help improve electrical connectivity of the power source 10 to a load (not shown), a negative polarity biocompatible conductive pad 34 is supported on a titanium adhesion layer (not shown) contacted to the outer surface of the base wall 22B of the titanium base tray 22. Similarly, a positive polarity biocompatible conductive pad 36 is supported on a titanium adhesion layer (not shown) contacted to the upper planar surface 26A of the titanium lid 26. The conductive pads 34, 36 are preferably made of gold that is deposited on the titanium tray 22 and lid 26 using PVD or chemical vapor deposition (CVD) methods known in the art.

The fill port 28 in the lid 26 is spaced laterally from the carbonaceous paste 32. This positioning provides a space or gap between the lower planar surface 26B of the lid 26 and the cathode active material 18 so that electrolyte (not shown) can flow into the interior of the casing 12 to activate the electrode assembly. A suitable electrolyte is a non-aqueous solution containing a lithium salt selected from LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆FSO₃, LiO₂CCF₃, LiSO₆F, LiB(C₆H₅)₄, LiCF₃SO₃, and mixtures thereof, dissolved in a mixture of solvents including ethylene carbonate, dimethyl carbonate, ethyl methyl carbonate, diethyl carbonate, dimethoxyethane, gamma-butyrolactone and propylene carbonate, plus various additives as required.

Preferably, the fill port 28 is closed by directing a laser beam at the titanium lid 26, or by press-fitting a closure plug (not shown) into the port 28, followed by weld the plug to the lid.

After electrolyte filling, the electrical power sources 10 of the present invention, whether of a primary or a secondary chemistry, are subjected to an appropriate electrical test. In one exemplary secondary electrochemical cell, a carbon/lithium nickel manganese cobalt oxide couple with a 2.5 mm diameter and a 0.7 mm height is charged to 4.2 V. The cell is then aged on open-circuit voltage (OCV) for 2 to 3 weeks before several charge/discharge cycles between 4.2 and 3.0 V are performed at a C/5 rate.

Exemplary electrical power sources according to the present invention have a diameter of about 2.5 mm and a height of about 0.7 mm. The wall thickness of the ceramic ring 20, the titanium top ring 24 and the annular sidewall 22A of the titanium base tray 22 are about 100 µm while the lid 26 and the base wall 22B of the titanium base tray 22 have thicknesses that are ≤ 100 µm, but in some electrical power sources can be as thick as about 4 mm. Thus, the efficient packaging of the miniature-sized electrical power sources according to the present invention results in a delivered capacity of about 300 µAh, or more.

Referring now to FIGs. 10 and 11, an alternate embodiment of an electrical power source 100 according to the present invention is illustrated. The power source 100 has a casing 112 housing an electrode assembly comprising a separator 14 that is positioned intermediate an anode active material 16 and an opposite polarity cathode active material 18. The casing 112 is manufactured from a ceramic intermediate ring 120 that is diffusion bonded to both a titanium base plate 122 and the titanium upper lid 26. The base plate 122 has an outer annular sidewall 122A with a thickness that ranges from about 100 µm to about 150 µm and that extends to an upper major face 1220B spaced from a lower major face 122C. The upper and lower major faces 122B and 122C of the base plate 122 reside along respective planes, which are parallel to each other. In this embodiment, the annular sidewall 22A of the titanium base tray 22 shown in FIGs. 1, 3 and 6 to 8 has been replaced with the ceramic intermediate ring 120 having the combined height of the previously described ceramic intermediate ring 20 and the titanium annular sidewall 22A. The anode active material 16 is supported on the base plate 122, in electrical continuity with the upper major face 122B through the carbonaceous paste 30.

The titanium lid 26 has an opening that serves as an electrolyte fill port 28 for activating the electrode assembly with an electrolyte. After electrolyte is filled into the casing 112, the fill port 28 is hermetically sealed. In all other aspects, the electrical power source 100 is similar to the power source 10 described above and illustrated in FIGs. 1 to 8.

It is appreciated that various modifications to the inventive concepts described herein may be apparent to those skilled in the art without departing from the spirit and scope of the present invention as defined by the hereinafter appended claims.

## Claims

1. An electrical power source, comprising:
a) casing, comprising:
i) a titanium base plate;
ii) a titanium top ring;
iii) a ceramic ring, wherein the ceramic ring is intermediate, and diffusion bonded to both the titanium base plate and the top ring; and
iv) a titanium lid closing the titanium top ring, and
b) an electrode assembly housed inside the casing, the electrode assembly comprising:
i) a first active material in electrical continuity with the base plate;
ii) a second, opposite polarity active material in electrical continuity with the lid closing the titanium top ring; and
iii) a separator intermediate the first and second active materials; and
c) an activating electrolyte in the casing contacting the electrode assembly,
d) wherein the titanium base plate serves as a first terminal and the titanium lid serves as a second, opposite polarity terminal for the power source.

2. The electrical power source of claim 1, wherein:
a) the titanium base plate comprises a base plate annular sidewall extending to a base plate upper major face spaced from a base plate lower major face;
b) the titanium top ring comprises a top ring outer annular surface extending to a top ring-shaped edge upper spaced from a top ring-shaped lower edge; and
c) the ceramic ring comprises an outer annular surface extending to a ceramic ring-shaped upper edge spaced from a ceramic ring-shaped lower edge,
d) wherein the lower edge of the ceramic ring is diffusion bonded to the upper major face of the titanium base plate and the upper edge of the ceramic ring is diffusion bonded to the top ring-shaped lower edge.

3. The electrical power source of claim 1 or claim 2, wherein:
the ceramic ring is selected from polycrystalline alumina, single crystal alumina, high-purity fused silica, and mixtures thereof; and/or
the ceramic ring has a thickness that ranges from about 100 µm to about 150 µm.

4. The electrical power source of any preceding claim, wherein the base plate comprises an annular sidewall that extends upwardly from a lower base wall serving to a ring-shaped rim surrounding a recess bounded by an inner surface of the annular sidewall and an inner surface of the base wall.

5. The electrical power source of any preceding claim, wherein:
the base plate has a recess, and the first active material is nested in the recess, or
the base plate has a planar upper major face, and the first active material is supported on the planar upper major face.

6. The electrical power source of any preceding claim, wherein the first and second active materials individually have a thickness that ranges from about 25 µm to about 5,000 µm.

7. The electrical power source of any preceding claim, wherein a first current collector resides between the base plate and the first electrode active material, and a second current collector resides between the lid and the second electrode active material,
wherein the first and second current collectors are preferably individually a first and a second conductive carbonaceous paste, and the first and second conductive carbonaceous pastes preferably each have a thickness that ranges from about 0.1 µm to about 3 µm.

8. The electrical power source of claim 7, wherein an electrolyte fill port extends through the lid and is spaced laterally from an annular edge of the second current collector.

9. The electrical power source of any preceding claim, wherein an electrolyte fill port in the casing has a diameter that ranges from about 40 µm to about 250 µm.

10. The electrical power source of any preceding claim, wherein a biocompatible conductive pad is contacted to at least one of the base plate and the lid.

11. The electrical power source of any preceding claim, wherein:
the electrical power source is selected from an alkaline cell, a primary lithium cell, a rechargeable lithium-ion cell, a Ni/cadmium cell, a Ni/metal hydride cell, a supercapacitor, and a thin film solid-state cell; and/or
the first active material is an anode and the second active material is a cathode.

12. The electrical power source of any preceding claim, wherein a weld connects the titanium lid to the titanium top ring.

13. A method for providing an electrical power source, comprising the steps of:
a) providing a titanium base plate, a titanium top ring, a titanium lid and a ceramic ring;
b) positioning the ceramic ring intermediate the titanium base plate and the titanium top ring followed by diffusion bonding the ceramic ring to both the titanium base plate and the titanium top ring;
c) providing a first active material in electrical continuity with the base plate;
d) positioning a separator on top of the first active material;
e) providing a second, opposite polarity active material in electrical continuity with the lid;
f) welding the lid to the titanium top ring;
g) filling an electrolyte into the casing to contact the electrode assembly,
h) wherein the titanium base plate serves as a first terminal and the titanium lid serves as a second, opposite polarity terminal for the power source.

14. The method of claim 13, including providing the base plate having a recess, and nesting the first active material in the recess.

15. The method of claim 13 or claim 14, including providing a first conductive carbonaceous paste residing between the base plate and the first electrode active material, and a second conductive carbonaceous paste residing between the lid and the second electrode active material.
